Europäisches Patentamt

European Patent Office

Office européen des brevets

(19)

(11) **EP 0 595 720 B1**

(12) **FASCICULE DE BREVET EUROPEEN**

(45) Date de publication et mention
de la délivrance du brevet:
**10.09.1997 Bulletin 1997/37**

(51) Int Cl.⁶: **G07F 7/10**

(21) Numéro de dépôt: **93402639.4**

(22) Date de dépôt: **27.10.1993**

(54) **Procédé et système d'incription d'une information sur un support permettant de certifier ultérieurement l'originalité de cette information**

Verfahren und Vorrichtung zum Schreiben von einer Information auf einen Datenträger, mit Möglichkeit zur Bestätigung der Originalität dieser Information

Process and system for recording information on a data carrier enabling to later certify the originality of this information

(84) Etats contractants désignés:
**AT BE CH DE DK ES FR GB GR IT LI LU NL SE**

(30) Priorité: **27.10.1992 FR 9212786**

(43) Date de publication de la demande:
**04.05.1994 Bulletin 1994/18**

(73) Titulaire: **CP8 TRANSAC**
**78430 Louveciennes (FR)**

(72) Inventeur: **Saada, Charles**
**F-92210 Saint-Cloud (FR)**

(74) Mandataire: **Corlu, Bernard Edouard et al**
**Direction de la Propriété Intellectuelle BULL SA,**
**Poste courrier: LV59C18,**
**68 route de Versailles**
**78430 Louveciennes (FR)**

(56) Documents cités:
**EP-A- 0 138 320        EP-A- 0 140 013**
**EP-A- 0 198 384        EP-A- 0 253 722**
**EP-A- 0 500 245        FR-A- 2 600 190**

## Description

L'invention est relative à un procédé d'inscription d'au moins une information sur un support qui permet de vérifier ultérieurement l'originalité de cette information, c'est-à-dire qui permet de montrer à la fois qu'une information est authentique et que le support sur lequel elle se trouve est bien celui qui a été utilisé lors de son inscription.

Une information est considérée comme authentique lorsqu'elle n'a pas été altérée ou modifiée par rapport à son contenu d'origine.

Si, de plus, le support sur lequel se trouve l'information est bien celui qui a été utilisé lors de l'inscription, l'information peut être considérée comme originale.

Par contre, si une information authentique ne se trouve pas sur son support d'origine, il s'agit d'une copie.

De nombreux documents émanent d'autorités habilitées. C'est le cas des pièces officielles, telles que les documents d'identité, les diplômes, les titres de paiement. Seule la présentation d'un original est parfois valable pour considérer ces documents.

Divers procédés ont été envisagés pour démontrer l'originalité de telles pièces.

Un procédé connu consiste à utiliser un support, généralement papier ou plastique, dans lequel un filigrane est implanté. La détermination de la présence d'un filigrane laisse supposer que le document présenté est original et émane d'une autorité habilitée.

Néanmoins, des techniques évoluées permettent de réaliser de faux documents qui semblent cohérents. Soit ils portent un faux filigrane parfaitement imité, soit encore une information n'émanant pas d'une personne habilitée est reportée sur un support original, donc avec un vrai filigrane frauduleusement substitué. La détermination d'un faux document nécessite une formation particulière des personnes chargées de la vérification.

L'invention a donc pour but principal un procédé d'inscription d'un support et un système qui permette de déterminer de façon certaine qu'une information portée par un support est originale.

Le procédé de l'invention utilise, de façon très avantageuse, pour sa mise en oeuvre, un objet portatif à mémoire et à circuits de traitement, tel qu'une carte à microprocesseur. Un tel objet présente la particularité de pouvoir contenir des données secrètes et des données accessibles, de même que des programmes mettant en oeuvre des fonctions logico-mathématiques. Il peut être remis à n'importe quelle personne (porteur de l'objet) et peut être substitué à toute pièce officielle ou tout document dont il peut être nécessaire de disposer d'un original.

Le document EP-A-0 138 320 décrit un procédé pour vérifier l'originalité d'une carte portative. La carte comporte trois données à savoir une première donnée identifiant l'autorité distributrice des cartes, une seconde donnée constituant un numéro de compte unique pour chaque carte, et une troisième donnée qui constitue l'image du numéro de compte après chiffrement par une clé secondaire spécifique de ladite autorité. Cette image n'est pas obtenue en faisant intervenir une clé secrète attribuée à la carte, mais seulement au moyen de ladite clé secondaire spécifique de l'autorité. En conséquence, ce procédé n'écarte pas le risque que la carte soit dupliquée frauduleusement, l'exemplaire frauduleux conservant la cohérence de l'exemplaire original.

Par ailleurs, le document EP-A-0 140 013 concerne un procédé de transfert de fonds dans lequel on utilise des cartes, chaque carte portant plusieurs informations et notamment un numéro de compte personnel PAN et une clé personnelle KP. Ces informations, ainsi que notamment une variable de transaction sont utilisées dans un processus d'authentification d'un message de transfert de fonds émanant d'un utilisateur vers l'autorité. Toutefois, il n'est pas prévu d'effectuer une image de l'information PAN au moyen de la clé KP, ni de disposer une telle image sur la carte en vue d'une authentification ultérieure.

La présente invention fournit des moyens pour vérifier le caractère original d'une quelconque information disposée sur un support et par ailleurs le caractère original du support lui-même. A cet effet, on inscrit sur le support l'information elle-même et une image de celle-ci obtenue par chiffrement de l'information à l'aide d'une première donnée Ks externe au support et d'une seconde donnée (Sid), diversifiée pour chaque objet et tenant compte d'une donnée secrète (Si) de l'objet.

Selon une autre caractéristique, le procédé comporte une phase de vérification de l'information contenue dans ladite zone de mémoire d'un objet, au cours de laquelle l'objet portatif est connecté à un terminal approprié, et il est déterminé que l'image résultat du chiffrement de l'information contenue dans cette zone de mémoire a été obtenue en utilisant les première et seconde données.

L'invention nécessite donc, pour sa mise en oeuvre, un objet portatif avec des circuits de traitement et une zone de mémoire avec une donnée secrète, de même qu'une zone de mémoire accessible en écriture pour l'inscription de l'information et de son image, cette zone demeurant accessible au moins en lecture après son inscription, notamment lors des phases de vérification ou de contrôle ultérieur de l'originalité de l'information. L'inscription et la vérification peuvent être effectués à l'aide d'un terminal approprié auquel est connecté l'objet.

L'invention est particulièrement avantageuse et permet d'aboutir de façon extrêmement fiable au but escompté.

En fait, la première donnée externe à l'objet portatif, et qui est fournie à des circuits de chiffrement sous le contrôle de la personne inscrivant l'information, constitue en fait une clé de chiffrement. Une personne non habilitée à inscrire une information ne connaît pas ou n'a pas accès à cette clé, de sorte qu'elle est incapable d'inscrire une information qui fournirait une image cohérente de cette information.

De plus, un fraudeur est incapable de recopier une information dans un autre objet et d'y associer une image cohérente.

En effet, l'emploi d'une donnée diversifiée pour chaque objet, lors de l'inscription dans la zone de mémoire accessible d'un objet, interdit que la même information, inscrite par une personne habilitée, ait la même image dans deux objets différents. En conséquence, en cas de copie d'une information et de son image dans un autre objet, la vérification permettrait, là encore, de déterminer que l'image n'est pas cohérente.

Enfin, l'utilisation d'une donnée secrète de l'objet interdit que le porteur ou la personne habilitée puissent influer sur le résultat du chiffrement.

Selon une autre caractéristique, le procédé met en oeuvre des moyens pour distinguer entre l'original, une copie et un faux.

D'autres caractéristiques et avantages de l'invention apparaitront à la lecture de la description qui va suivre, faite en regard des figures annexées, sur lesquelles:

- les figures 1 et 2 illustrent de façon schématique deux variantes de dispositifs permettant la mise en oeuvre totale ou partielle de l'invention;

- la figure 3 présente un mode de mise en oeuvre des étapes d'inscription d'une information et de son image;

- les figures 4 et 5 présentent deux variantes des étapes de vérification de l'originalité et de l'authenticité d'une information qui aurait été inscrite en mettant en oeuvre les étapes de la figure 3;

- la figure 6 présente, dans un mode de mise en oeuvre préféré, les étapes d'inscription d'une information et de son image;

- la figure 7 présente, dans un mode de mise en oeuvre préféré, les étapes de vérification de l'originalité et de l'authenticité d'une information.

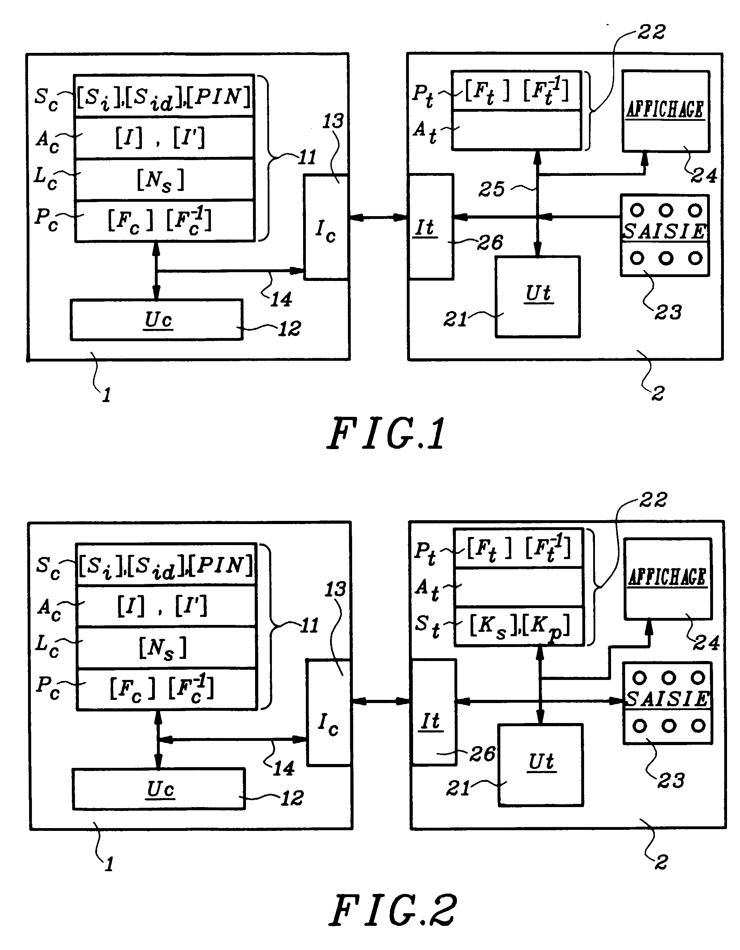

Sur les figures 1 et 2, on a illustré de façon schématique deux variantes de dispositifs permettant la mise en oeuvre totale ou partielle de l'invention, c'est-à-dire utilisables soit seulement pour l'inscription des informations dont l'originalité devra être certifiée ultérieurement, soit seulement pour ladite vérification, soit pour l'inscription et la vérification.

Comme il sera montré ultérieurement, le type d'utilisation possible des dispositifs des figures 1 et 2 dépend de la nature des données et protocoles (ou programmes) de fonctionnement que contiennent ces dispositifs.

Le dispositif illustré par la figure 1 comprend un objet portatif 1, tel qu'une carte électronique à microcalculateur, et un terminal 2 auquel il est possible de connecter, au moins temporairement, l'objet portatif 1.

L'objet portatif 1 comporte, de façon connue, une mémoire 11, des circuits de traitement 12, pour effectuer des opérations sur des données de sa mémoire, ou sur des données fournies de l'extérieur de l'objet portatif 1, par exemple à partir d'un terminal 2.

Pour qu'un dialogue soit possible d'une part entre la mémoire et les circuits de traitement, et d'autre part entre l'objet portatif 1 et l'extérieur, l'objet portatif 1 comporte des moyens d'interfaçage 13 avec l'extérieur et des moyens d'échange 14 entre les éléments 11, 12, 13 qu'il comporte.

De façon connue, les moyens d'échange 14 sont des lignes de transmission ou "bus".

De préférence, les circuits de traitement 12 de l'objet portatif 1 sont constitués par un microprocesseur et forment, avec la mémoire 11, une structure monolithique. De façon connue, cette structure permet d'obtenir des mémoires inviolables puisque l'accès aux zones de la mémoire s'effectue sous le contrôle des circuits de traitement constitués par le microprocesseur.

Pour la mise en oeuvre de l'invention, la mémoire 11 de l'objet portatif 1 comporte par exemple:

- une première zone Sc secrète;

- une seconde zone Ac, accessible en lecture à tout instant de la durée de vie de l'objet portatif 1, et accessible en écriture au moins pendant la phase d'inscription d'une information et de son image;

- une troisième zone Pc contenant le programme de fonctionnement des circuits de l'objet portatif 1.

- une quatrième zone Lc, accessible en lecture, et contenant des données non secrètes, inscrites lors de la fabrication de l'objet, telles que, par exemple, le numéro de série [Ns] de l'objet portatif 1.

La zone secrète Sc, encore appelée la mémoire secrète, contient exclusivement des données inaccessibles de l'extérieur de l'objet portatif 1. Ces données ne peuvent être exploitées que par les circuits de traitement 12 de l'objet portatif 1. En particulier, cette zone contient une donnée secrète, qui est soit commune à tous les objets destinés à une même application [Si], soit diversifiée [Sid], et qui sera utilisée pour chiffrer l'information [I] dont l'originalité est susceptible d'être vérifiée ultérieurement.

Cette zone peut aussi contenir une donnée [PIN] constituant le "nombre d'identification personnel" du porteur de l'objet. Cette donnée est corrélée à une donnée de vérification [PIN'] qu'il a reçue confidentiellement lors de l'attribution de l'objet. Il doit parfois saisir cette donnée de vérification lorsqu'il utilise son objet sur un terminal approprié. Une saisie correcte laisse supposer que le porteur est habilité.

La seconde zone Ac est celle dans laquelle ladite information [I] et son image [I'], résultat du chiffrement, sont inscrites.

Bien entendu, les différentes zones peuvent avoir une structure électronique différente l'une de l'autre, sans que ceci soit d'aucune importance. Néanmoins, il doit être possible d'écrire dans la seconde zone Ac, au moins une fois après la mise en service de l'objet portatif 1, pour y inscrire l'information [I] et son image [I'].

Le terminal 2 contient des circuits de traitement 21, une mémoire 22, des moyens de dialogue avec un utilisateur comportant des moyens de saisie de données 23, tels qu'un clavier ou tout autre dispositif approprié (souris, crayon optique, scanner, etc), et des moyens d'affichage 24 (écran, imprimante). Ces divers éléments sont reliés entre eux par l'intermédiaire de liaisons 25.

Enfin, le terminal 2 comporte des moyens 26 permettant la mise en communication entre ses circuits et ceux de l'objet portatif 1, par l'intermédiaire des moyens d'interfaçage 13 de celui-ci.

La mémoire 22 du terminal 2 comporte au moins une première zone Pt, avec le programme de fonctionnement de ses circuits, et une seconde zone At de travail dont le rôle sera expliqué ultérieurement.

Les moyens d'interfacage 13 de l'objet portatif 1, lorsqu'il s'agit d'une carte électronique, sont constitués, de façon connue, par des contacts placés sur une face de cet objet portatif 1. Dans ce cas, les moyens 26 correspondants du terminal 2 sont constitués par un connecteur approprié.

Ainsi, le terminal 2 peut être réalisé à partir de n'importe quel dispositif ayant une mémoire et des circuits de traitement: il peut donc s'agir d'un terminal 2 spécifique, ou d'un ordinateur qui serait programmé en conséquence.

Dans un premier mode de réalisation, le système pour la mise en oeuvre du procédé comporte au moins un terminal 2 agencé pour pouvoir être utilisé seulement lors des phases d'inscription des informations et de leur image dans des objets portatifs 1, et au moins un autre terminal 2 agencé pour pouvoir être utilisé seulement lors des phases de vérification de l'originalité des informations des objets portatifs 1 qui lui sont connectés, de sorte que ces diverses phases sont réalisées en connectant les objets à des terminaux distincts.

Dans un second mode, le système comprend au moins un terminal 2 permettant indifféremment l'inscription et la vérification de l'originalité des informations des objets portatifs 1 qui lui sont connectés.

Le fait qu'un terminal 2 puisse effectuer certaines phases dépend uniquement des programmes et données qu'il contient, si ce terminal 2 est réalisé à partir d'un microprocesseur ou d'un ordinateur.

Comme indiqué auparavant, l'inscription d'une information dans la mémoire accessible d'un objet portatif 1 est accompagnée d'un chiffrement de cette information à l'aide, entre autres, d'une première donnée [Ks] externe à l'objet portatif 1, et fournie sous le contrôle de la personne inscrivant l'information. Cette première donnée constitue donc une clé de chiffrement. Or, pour éviter qu'une clé de chiffrement puisse être utilisée par une personne non habilitée, il faut qu'elle soit ou bien confidentielle, ou bien secrète.

Une clé est dite confidentielle si elle n'est connue que par un certain nombre de personnes habilitées, et doit donc être entrée dans le système par l'une ou l'autre de ces personnes. Une clé est dite secrète si elle est contenue dans une zone secrète d'une mémoire, et ne peut être exploitée que par des circuits de traitement associés à cette mémoire.

En conséquence, un système utilisant le terminal 2 de la figure 1 ne permet pas l'utilisation de clés secrètes, car le terminal 2 ne contient pas de zone secrète. Par contre, les moyens de saisie 23 dont dispose ce terminal 2 permettent qu'une personne habilitée y saisisse une clé confidentielle de chiffrement.

La figure 2 illustre une variante de dispositif permettant la mise en oeuvre partielle ou totale du procédé.

Cette variante présente une seule différence avec celle de la figure 1, de sorte que les éléments communs aux deux figures portent les mêmes références et ne seront pas décrits à nouveau.

Cette différence unique est la suivante: la mémoire 22 du terminal 2 comporte une troisième zone St secrète, donc accessible par les seuls circuits de traitement du terminal 2.

Cette troisième zone St peut contenir la première donnée ou clé [Ks], utilisée pour le chiffrement de l'information, et fournie sous le contrôle de la personne inscrivant l'information et/ou une autre donnée [Kp], qui constitue également une clé, nécessaire à la vérification ultérieure de l'originalité de l'information, au cas où les programmes utilisés nécessitent l'usage de données différentes.

En conséquence, le chiffrement et/ou la vérification ultérieure de l'originalité peuvent se faire sans qu'une personne chargée de l'inscription et/ou une personne chargée de la vérification aient à connaitre une quelconque clé.

Bien entendu, la présence de l'une et/ou l'autre de ces clés dans le terminal 2 n'est pas suffisante: encore faut-il que le terminal 2 soit adapté ou possède un programme Pt adapté en conséquence.

Il a été évoqué la possibilité que les données ou clés [Ks], [Kp] nécessaires à l'inscription et à la vérification soient identiques ou différentes. L'existence d'une différence ou non entre ces données dépend des algorithmes et des systèmes utilisés lors des phases d'inscription et de vérification. En effet, ainsi qu'il apparaitra plus tard, ces phases nécessitent le déroulement de programmes de chiffrement et de programmes de déchiffrement, qui utilisent des algorithmes connus ou non, qui peuvent être à clés publiques ou à clés secrètes.

Elles peuvent être identiques dans la mesure où la vérification ne peut être effectuée que par la même personne ou autorité (physique ou morale) que celle qui a inscrit l'information.

Par contre, si la vérification est autorisée à des tiers, il faut que ces clés soient différentes. Sinon une personne non habilitée pour les inscriptions, mais qui serait autorisée à effectuer des vérifications pourrait, si le dispositif de vérification comporte également le programme d'inscription, réaliser un faux document semblant conforme.

Ainsi, dans le cas des algorithmes à clés publiques ces données doivent être différentes: le chiffrement s'effectue avec une clé secrète ou confidentielle, alors que le déchiffrement peut s'effectuer à l'aide d'une clé dont la connaissance par quiconque (d'où la notion de clé publique) n'influe en rien sur la sécurité du système.

Le procédé de l'invention consiste, on le rappelle, d'une part, à inscrire dans la zone de mémoire Ac accessible de l'objet portatif 1, au moins l'information [I] et une image [I'] de celle-ci. Cette image [I'] est obtenue en mettant en oeuvre un protocole de chiffrement de l'information [I]. Ce protocole prend en compte au moins l'information [I], une première donnée [Ks], et une seconde donnée [Sid], diversifiée pour chaque objet portatif 1.

Il consiste, d'autre part, à vérifier qu'une image [I'] a été obtenue à l'aide des première et seconde données, pour en déduire que l'information [I] associée est originale.

La première donnée [Ks] est prise en compte par les circuits de traitement 21 du terminal 2 sous le contrôle de la personne ou de l'autorité habilitée à entrer l'information. Cette donnée peut être confidentielle: dans ce cas, la personne habilitée doit la rentrer à l'aide du clavier du terminal 2. Elle peut être secrète: dans ce cas, elle est mémorisée en permanence dans une zone St secrète de la mémoire d'un terminal 2.

La seconde donnée prend en compte au moins une donnée secrète [Si] contenue dans la zone Sc de mémoire secrète de l'objet portatif 1.

Cette seconde donnée est diversifiée pour permettre que la même information [I] qui serait inscrite dans deux objets portatifs 1 différents possède une image [I'] différente dans chaque objet portatif 1. C'est cette caractéristique qui permet de distinguer un original d'une copie.

En effet, l'utilisation d'une donnée non diversifiée permettrait seulement de déterminer, lors de la vérification, qu'une information inscrite dans la zone Ac accessible de mémoire d'un objet portatif 1 est authentique, sans néanmoins distinguer entre l'original et la copie.

Plusieurs méthodes, connues en elles-mêmes, permettent d'aboutir à la diversification de la seconde donnée.

Une première méthode consiste à utiliser directement, en tant que seconde donnée [Sid] diversifiée la donnée secrète [Si] de la mémoire de l'objet portatif 1, qui a été diversifiée lors de son inscription pendant la fabrication ou la personnalisation de la mémoire de l'objet portatif 1, avant sa remise à son utilisateur final, en utilisant un protocole particulier de diversification. Un tel protocole est par exemple décrit dans le brevet américain délivré à la demanderesse sous le numéro 4,811,393.

Une autre méthode de diversification consiste à mettre en oeuvre, dans les circuits de traitement de l'objet, au moment du calcul de l'image [I'], un programme Pc, mémorisé dans l'objet, qui applique une fonction de chiffrement Fc d'une part à une clé secrète [Si] non diversifiée, mémorisée dans la zone secrète Sc de la mémoire de l'objet, mais commune à tous les objets et, d'autre part, à une autre donnée de l'objet, systématiquement diversifiée, mais pas nécessairement secrète, tel que le numéro de série [Ns] de l'objet, contenu dans la zone Lc accessible en lecture de l'objet portatif 1.

Comme indiqué, un terminal 2 conforme à celui de la figure 1 ou à celui de la figure 2 peut être utilisé pour l'inscription d'une information et de son image, à condition d'être adapté ou de contenir un programme approprié; de même, il peut être utilisé pour la vérification de l'originalité, à condition d'être adapté ou de contenir un programme approprié.

Quelle que soit la méthode employée, l'inscription d'une information dans un objet portatif 1, de même que la vérification de son originalité, s'effectuent lorsque l'objet portatif 1 est connecté au terminal 2 approprié.

De plus, quel que soit le système utilisé pour la mise en oeuvre du procédé, l'information est rentrée dans la mémoire accessible de l'objet portatif 1 par l'intermédiaire des moyens de saisie 23 de données du terminal 2 tels que le clavier et/ou de tout autre dispositif (souris, crayon optique, scanner, etc) approprié qui serait connecté au terminal 2.

De préférence, au moment de sa saisie, une information [I] est temporairement mémorisée dans la zone de travail At du terminal 2. Cette mémorisation temporaire est nécessaire pour que son chiffrement puisse avoir lieu, car comme il sera expliqué plus tard, des calculs ont lieu dans le terminal sur la base de cette information. Lorsque la phase d'inscription est terminée, une information et toutes les autres données spécifiques qui ont pu être mémorisées dans cette zone de travail At du terminal 2 sont effacées.

Outre que la mémorisation permet le chiffrement, elle permet également que l'information soit vérifiée, puis éventuellement modifiée ou complétée, en cas de saisie erronée ou incomplète, avant son transfert vers la zone de mémoire Ac accessible de l'objet portatif 1.

Ainsi, si la mémoire accessible Ac de l'objet portatif 1 ne peut plus être modifiée après inscription (utilisation d'une mémoire PROM par exemple), cette vérification et éventuelle modification du contenu de la mémoire accessible du terminal 2 permettent d'éviter tout problème qui serait dû à une inscription erronée ou incomplète dans une mémoire non modifiable par la suite.

Par ailleurs, même si la mémoire accessible Ac de l'objet portatif 1 est modifiable (EEPROM par exemple), il est préférable de mémoriser l'information dans la zone de travail At du terminal 2, pour pouvoir éventuellement la corriger avant son transfert vers l'objet portatif 1, car celle mémorisée dans l'objet portatif 1 doit exactement correspondre à celle qui va être utilisée pour le chiffrement. Or, puisque le chiffrement est réalisé sur la base de l'information qui est mémorisée dans la zone de travail At du terminal 2, il faudrait également modifier cette dernière si celle contenue dans la mémoire accessible Ac de l'objet portatif 1 était modifiée après son transfert.

Par ailleurs, quel que soit le système pour la mise en oeuvre du procédé, si le terminal 2 utilisé pour les inscriptions comporte une zone secrète St avec la clé [Ks] de chiffrement, celle-ci sera automatiquement prise en compte sans que l'opérateur (la personne ou l'autorité) habilité pour inscrire les informations doive la saisir par l'intermédiaire des moyens de saisie de données du terminal 2.

Dans le cas contraire, si le terminal 2 utilisé ne comporte pas une zone secrète St avec la clé [Ks] de chiffrement, celle-ci devra être saisie par l'opérateur habilité à l'aide des moyens de saisie de données du terminal 2.

Il en sera de même de la clé [Kp] de vérification, au cas où elle est différente de la clé [Ks] de chiffrement: si elle est mémorisée dans une zone secrète d'un terminal 2 de vérification, elle sera automatiquement prise en compte sans que l'opérateur habilité à effectuer les vérifications doive la rentrer par l'intermédiaire des moyens de saisie de données du terminal 2; si elle n'est pas mémorisée, elle devra être saisie par l'opérateur habilité à l'aide des moyens de saisie de données du terminal 2.

Plusieurs variantes sont envisageables pour la mise en oeuvre du procédé mais, pour chacune, les opérations d'inscription d'une information et de son image seront initialisées par un opérateur habilité, lorsque l'objet portatif 1 est connecté au terminal 2.

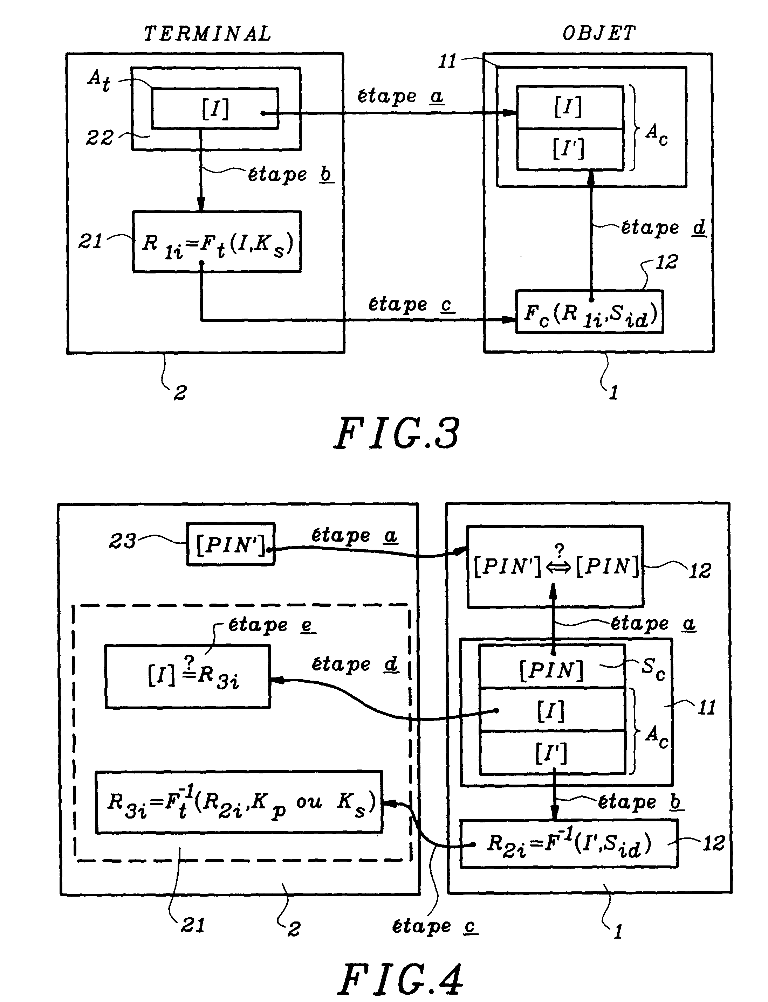

Les figures 3 à 7 font apparaître, à l'aide de flèches, les flux essentiels de données ou d'informations dans les diverses mises en oeuvre de l'invention.

Une première mise en oeuvre du procédé est illustrée par les figures 3 à 5.

L'inscription d'une information et de son image sont illustrées par la figure 3.

Une information [I], dont il faudra vérifier l'originalité par la suite, est d'une part saisie par l'opérateur habilité puis mémorisée dans la zone de mémoire de travail At du terminal 2, et d'autre part transférée pour y être inscrite au cours d'une première étape a, vers la zone de mémoire accessible Ac de l'objet portatif 1. De préférence, comme décrit auparavant, le transfert s'effectue après éventuelle modification du contenu de la zone de travail At du terminal 2, et non pas directement au moment de la saisie des données constituant l'information [I].

L'information mémorisée dans la zone de mémoire At accessible du terminal 2 est alors chiffrée, dans les circuits de traitement 21 du terminal 2 à l'aide du programme [Pt] contenu dans ce terminal 2 (au cours d'une étape b). Ce programme met en oeuvre une fonction de chiffrement Ft prenant en compte cette information et la clé [Ks] de chiffrement, de façon à obtenir un résultat intermédiaire R1i qui est fonction de la clé et de l'information, ce qui peut s'écrire: R1i = Ft(I, Ks).

Puis ce résultat intermédiaire R1i est transmis (au cours d'une étape c) aux circuits 12 de traitement de l'objet portatif 1, dans lesquels une fonction de chiffrement Fc, mise en oeuvre par un programme [Pc] contenu dans ces circuits, y est appliquée. Cette fonction prend en compte, outre ce résultat intermédiaire R1i, la seconde donnée [Sid] diversifiée de l'objet portatif 1, obtenue par mise en oeuvre de l'un ou l'autre des procédés de diversification évoqués auparavant.

On obtient donc un résultat [I'], qui est l'image chiffrée de l'information, au moyen de la première donnée (clé [Ks]) et de la seconde donnée [Sid] diversifiée de l'objet portatif 1, qui est elle-même fonction d'une clé secrète [Si] de ce dernier, ce qui peut s'écrire:

$$[I'] = Fc(R1i, Sid);$$

ou encore

$$[I'] = Fc(Ft(I, Ks), Sid);$$

ou, en définitive,

$$[I'] = Fc(I, Ks, Sid).$$

Cette image [I'] est ensuite transférée (au cours d'une étape d) et inscrite dans la zone de mémoire accessible Ac de l'objet portatif 1, de sorte que cette zone contient bien l'information [I] et son image [I']. Enfin, l'information qui avait été mémorisée, au début de cette phase, dans la zone de travail At du terminal 2 est effacée. La phase d'inscription est ainsi terminée.

Au moins deux variantes sont envisageables pour la vérification de l'originalité d'une information inscrite selon cette première mise en oeuvre.

La première variante est illustrée par la figure 4. Elle comporte 5 étapes numérotées de a à e.

La première a est facultative, et ne peut avoir lieu que si la mémoire secrète Sc de l'objet portatif 1 contient un nombre d'identification personnel [PIN] du porteur. Elle consiste en la vérification de l'habilitation du porteur. De façon connue, pour cela, le porteur entre la donnée de vérification [PIN'] de son nombre d'identification personnel, par exemple à l'aide du clavier faisant partie des moyens de saisie 23 du terminal 2. Cette donnée corrélée est transmise aux circuits de traitement de l'objet portatif 1 qui effectuent le traitement approprié. En cas de non concordance, le processus de vérification cesse.

La vérification consiste ensuite à faire effectuer, par les circuits de traitement de l'objet portatif 1 (au cours d'une étape b), un programme de déchiffrement de l'image [I'] inscrite dans sa zone de mémoire accessible Ac. Ce programme entraîne l'application, à l'image [I'] et à la seconde donnée [Sid] diversifiée, de la fonction de déchiffrement $F^{-1}c$ correspondant à la fonction de chiffrement Fc qui avait été appliquée dans l'objet portatif 1 au premier résultat intermédiaire R1i.

Un second résultat intermédiaire $R2i = F^{-1}c(I', Sid)$ est obtenu qui, si l'objet portatif 1 est celui dans lequel l'information [I] et son image [I'] avaient été inscrites au départ, est égal au premier résultat intermédiaire [R1i]. Ce second résultat intermédiaire R2i est alors transmis (au cours d'une étape c) aux circuits de traitement du terminal 2, dans lesquels, à ce second résultat intermédiaire R2i et à la clé de déchiffrement appropriée [Ks] ou [Kp], mémorisée dans la zone secrète St du terminal 2 ou saisie par l'opérateur habilité, est appliquée la fonction de déchiffrement $F^{-1}t$ correspondant à la fonction de chiffrement Ft qui avait été appliquée dans le terminal 2 à l'information [I].

En conséquence, parce que les opérations successives de déchiffrement mises en oeuvre lors de la vérification sont le corollaire des opérations de chiffrement mises en oeuvre lors de l'inscription, on obtient un dernier résultat [R3i] qui, si l'information contenue dans l'objet portatif 1 est authentique, est cette information [I] elle-même.

C'est pourquoi, l'information [I] contenue dans la zone Ac de mémoire accessible de l'objet portatif 1 est transférée (au cours d'une étape d) vers les circuits de traitement du terminal, puis comparée (au cours d'une étape e) avec ce dernier résultat R3i. En cas d'égalité, l'information contenue dans la zone Ac de mémoire accessible de l'objet portatif 1 est déclarée originale.

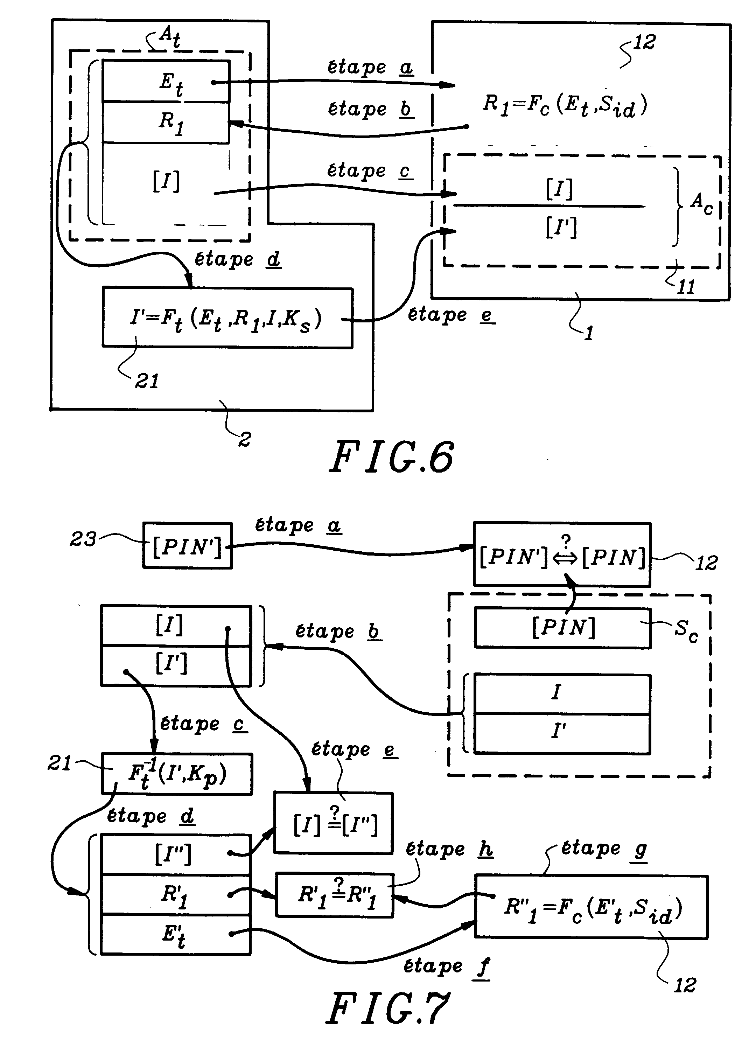

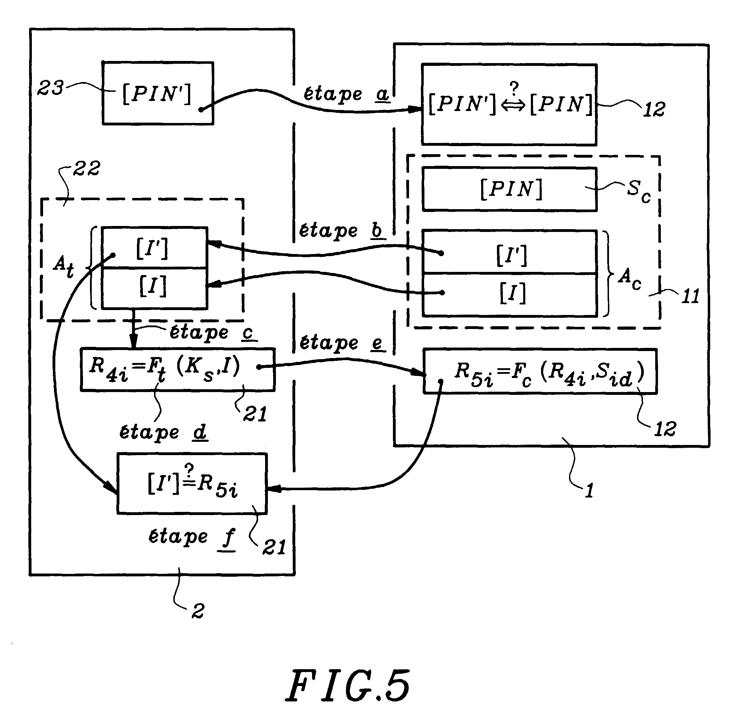

Une seconde variante pour la vérification est illustrée par la figure 5.

Elle comporte une première étape a facultative, qui consiste en la vérification de l'habilitation du porteur lorsque la mémoire secrète Sc de l'objet portatif 1 contient un nombre d'identification personnel [PIN] du porteur. Elle se déroule comme décrit en regard de la figure 4.

Une seconde étape b consiste en un transfert de l'information [I] et de son image [I'] contenues dans la zone Ac de mémoire accessible de l'objet portatif 1, vers la zone de mémoire de travail At du terminal et la mémorisation temporaire, de ces données dans cette zone.

L'information [I] ainsi mémorisée dans la zone de mémoire de travail At du terminal 2 est ensuite chiffrée (au cours d'une étape c) par ses circuits de traitement, en mettant en oeuvre le programme Pt de chiffrement, mémorisé dans le terminal 2, qui a permis d'obtenir le premier résultat intermédiaire R1i lors de la phase d'inscription, c'est-à-dire le programme mettant en oeuvre la fonction de chiffrement Ft, qui tient compte de la clé [Ks].

Un autre résultat intermédiaire R4i est obtenu dans le terminal 2 qui est transmis (au cours d'une étape d) aux circuits de traitement de l'objet portatif 1, dans lesquels la fonction de chiffrement Fc, qui avait été utilisée lors de l'inscription, et qui est mise en oeuvre par le programme [Pc] contenu dans les circuits de l'objet portatif 1, tenant compte de la donnée diversifiée [Sid], y est appliquée.

On constate que les opérations successives de chiffrement de l'information [I], telle qu'elle a été relue dans la zone de mémoire Ac accessible de l'objet portatif 1, et qui sont effectuées lors de cette vérification sont identiques à celles mises en oeuvre lors de l'inscription. Il en résulte qu'on obtient un dernier résultat R5i qui, si l'information contenue dans l'objet portatif 1 est authentique et si le support est celui qui a été utilisé lors de l'inscription, correspond à l'image [I'] qui avait été calculée et mémorisée dans la zone accessible Ac avec l'information [I] lors de la phase d'inscription. Ce dernier résultat R5i est retransmis (au cours d'une étape e) aux circuits du terminal 2, dans lesquels il est comparé (au cours d'une étape f) avec l'image [I'] qui a été mémorisée dans sa zone de mémoire de travail At en début de phase de vérification. En cas d'égalité, l'information est déclarée originale.

Ce premier mode de mise en oeuvre, avec ses diverses variantes pour la vérification, n'est cependant pas totalement satisfaisant.

D'une part, il ne permet pas de distinguer entre une information authentique, mais recopiée sur un support différent de celui d'origine, et l'information totalement fausse, ou modifiée. Dans tous ces cas, le résultat de la comparaison sera le même: l'information sera déclarée fausse.

Il permet simplement de déterminer qu'une information est originale.

D'autre part, les variantes pour l'inscription ou la vérification impliquent que les circuits de traitement des objets portatifs peuvent être appelés à chiffrer ou déchiffrer des données (l'information [I] et/ou son image [I']) qui peuvent être de taille variable ou importante, ce qui n'est pas réalisable par la totalité des circuits de traitement des objets portatifs 1 connus.

En effet, généralement, les circuits de traitement des objets connus sont conçus pour effectuer des opérations de chiffrement ou de déchiffrement sur des données de taille fixe et souvent réduite.

C'est pourquoi un second mode de mise en oeuvre de l'invention est envisagé, qui permet la distinction entre l'original, la copie et le faux, et est applicable à tout type d'objet qui contient au moins une donnée secrète [Si], et possède au moins une fonction de chiffrement élémentaire, lui permettant d'obtenir un résultat fonction de cette donnée secrète et d'au moins une autre donnée de taille usuelle dans les objets.

Ce second mode est illustré, dans sa mise en oeuvre préférentielle, par les figures 6 et 7. Les diverses étapes de l'inscription sont illustrées par la figure 6, et celles de la vérification par la figure 7.

L'inscription peut se résumer en 5 étapes distinctes, numérotées de a à e sur la figure 6.

Dans une première étape a, une donnée Et est élaborée et transmise du terminal 2 vers les circuits de traitement de l'objet. Par ailleurs, cette donnée est temporairement mémorisée dans la zone de travail At du terminal 2.

Un programme de chiffrement de cette donnée Et est ensuite mis en oeuvre dans l'objet, qui applique une fonction Fc de chiffrement à cette donnée Et et à une donnée diversifiée, soit contenue dans la zone secrète Sc de l'objet, soit obtenue par mise en oeuvre de l'une ou l'autre des méthodes de diversification évoquées auparavant.

Un résultat intermédiaire R1 = Fc(Et, Sid) est obtenu qui est transmis dans une seconde étape b vers la zone de travail At du terminal 2, dans laquelle il est mémorisé temporairement.

Par ailleurs, l'information [I], après avoir éventuellement été revue et corrigée, est, d'une part, mémorisée temporairement dans la zone de travail At du terminal 2 et, d'autre part, transmise lors d'une troisième étape c vers la zone accessible Ac de l'objet portatif 1 dans laquelle elle est mémorisée.

A l'issue de cette troisième étape, la zone de travail At du terminal 2 comporte un bloc de données constitué par l'information [I], la donnée Et, et le résultat R1 du chiffrement de cette donnée Et effectué préalablement dans l'objet portatif 1.

Dans une quatrième étape d, un programme de chiffrement Pt est déroulé dans les circuits de traitement du terminal 2, qui met en oeuvre une fonction de chiffrement Ft appliquée à ce bloc et à une clé de chiffrement [Ks].

Comme indiqué auparavant, cette clé de chiffrement [Ks] est soit contenue dans une zone secrète St du terminal 2, et gérée par ses circuits de traitement, soit saisie par l'opérateur habilité.

En définitive, un résultat est obtenu: il s'agit du bloc chiffré qui est donc une image [I'] de l'information [I]. En effet, la dernière phase du chiffrement est appliquée au bloc de données qui contient, entre autres, cette information [I]. De plus, cette image [I'] est fonction de la clé de chiffrement [Ks] du terminal, donc d'une première donnée sous le contrôle de la personne habilitée, puisque c'est cette clé qui a été appliquée au bloc lors de la dernière étape décrite; enfin, cette image [I'] est fonction de la donnée diversifiée [Sid] de l'objet portatif 1, puisque le bloc qui a été chiffré lors de la dernière étape contient le résultat R1 obtenu par chiffrement de la donnée Et à l'aide de cette donnée diversifiée [Sid].

Ceci peut s'exprimer par la relation suivante:

$$[I'] = Ft(I, Ks, Sid).$$

Enfin, lors d'une cinquième étape e, ce bloc chiffré constituant l'image [I'] de l'information [I] est inscrit dans zone accessible Ac de l'objet portatif 1, de sorte qu'à l'issue de ces étapes, cette zone contient bien l'information [I] et son image [I'].

Puis le contenu de la zone de travail At du terminal 2 est effacé.

C'est l'utilisation de la donnée Et, transmise lors de la première étape a, qui permet d'utiliser le procédé avec n'importe quel objet portatif 1 à mémoire et circuits de traitement, tel qu'une carte à microcalculateur, contrairement au premier mode décrit. En effet, le format de cette donnée peut être choisi pour être compatible avec les possibilités de chiffrement de l'ensemble des cartes à microcalculateur usuelles.

De préférence, cette donnée Et est élaborée de façon aléatoire par les circuits de traitement du terminal, à l'aide d'un moyen approprié, tel qu'un générateur de données et/ou de nombres aléatoires, connu en soi et incorporé dans ce dernier.

Ceci permet d'éviter qu'une même information [I] qui est susceptible d'être inscrite au moins deux fois dans le même objet portatif 1 ait deux fois la même image [I']. Ainsi, les possibilités de fraude n'existent plus. Cette précaution est utile par exemple lorsque l'information est relative à un droit qu'il faut renouveler tel que, par exemple, une valeur monétaire, lorsque l'objet est une carte de paiement.

L'utilisation d'un nombre aléatoire complète celle de la donnée diversifiée qui, elle, évite d'obtenir les mêmes résultats dans deux objets différents.

Le mode préféré de mise en oeuvre, pour la vérification de l'originalité d'une donnée contenue dans la zone de mémoire Ac accessible de l'objet portatif 1, est illustré par la figure 7.

Elle peut se résumer en 8 étapes, numérotées de a à h sur cette figure.

La première étape a est facultative, et consiste en la vérification de l'habilitation du porteur lorsque la mémoire secrète Sc de l'objet portatif 1 contient un nombre d'identification personnel [PIN] du porteur. Elle se déroule comme décrit en regard de la figure 4.

Une seconde étape b consiste à copier dans la zone de travail At du terminal 2, à partir de la zone de mémoire Ac accessible de l'objet portatif 1, l'information [I] et son image [I'] qui y sont contenues.

Une troisième étape c consiste à faire appliquer à l'image [I'] et à une clé de déchiffrement [Ks] ou [Kp], par les circuits de traitement du terminal 2, une fonction de déchiffrement $F^{-1}t$ correspondant à la fonction de chiffrement Ft qui avait été utilisée lors de la quatrième étape de la phase d'inscription. Ce déchiffrement permet d'obtenir (étape d) un bloc de trois données [I"], [E't], [R'1] qui peuvent être distinguées l'une de l'autre.

Trois cas peuvent alors se présenter.

Le premier est celui dans lequel l'information [I] contenue dans la carte et l'image [I'] sont originales.

Dans ce cas, le bloc obtenu par déchiffrement est identique à celui qui a servi lors du chiffrement. En conséquence:

- la première donnée [I"] correspond à l'information [I] d'origine transmise par ailleurs en clair de l'objet au terminal;

- la seconde donnée [E't] correspond à la donnée [Et] qui a été transmise, lors de la phase d'inscription, du terminal 2 vers les circuits de traitement de l'objet 1, puis chiffrée pour donner le résultat [R1];

- la troisième donnée [R'1] correspond au résultat [R1] effectivement calculé par les circuits de cet objet lors de la phase d'inscription, résultat qu'il serait possible d'obtenir à nouveau en appliquant la fonction de chiffrement Fc de l'objet à la seconde donnée [E't] issue du déchiffrement.

Le second cas est celui dans lequel une information [I] et son image [I'] ont été copiées dans un support différent de celui d'origine.

Dans ce cas, puisque l'image [I"] lue dans l'objet portatif 1 avait été obtenue par une procédure régulière, c'est-à-dire en utilisant la clé de chiffrement [Ks] correcte, alors le bloc déchiffré correspond à celui qui avait servi au chiffrement lors de la phase d'inscription dans l'objet portatif 1 d'origine.

En conséquence, la première donnée [I"] correspond à l'information [I], et les seconde [E't] et troisième [R'1] correspondent à celles [Et], [R1] qui ont été utilisées lors du chiffrement dans l'objet original. Cependant, l'application de la fonction de chiffrement Fc, contenue dans l'objet portatif 1, à la seconde donnée E't ne permettrait pas de retrouver la troisième donnée [R'1].

Le troisième cas est celui dans lequel l'information ne correspond pas à une information inscrite au départ par une personne habilitée.

Dans ce cas, aucune cohérence n'existe entre les données déchiffrées et les données du bloc ayant servi au chiffrement. Aucune correspondance ne peut être établie.

Compte tenu de ce qui précède, la phase de vérification se prolonge par les étapes suivantes:

Une cinquième étape e consiste à faire comparer, par les circuits de traitement du terminal 2, la première donnée [I"] issue du déchiffrement et l'information [I] telle qu'elle a été copiée de la zone de mémoire Ac accessible de l'objet portatif 1 vers la zone de travail At du terminal 2, lors de la seconde étape b de la phase de vérification.

En cas de non égalité entre la première donnée [I"] et l'information [I], l'objet est déclaré comme comportant une information non inscrite par une personne habilitée, et la vérification est stoppée.

En cas d'égalité, signifiant que l'objet portatif 1 comporte une information inscrite par une personne habilitée, la seconde donnée [E't] est transmise du terminal 2 vers les circuits de traitement de l'objet 1 lors d'une une sixième étape f.

Le programme de chiffrement contenu dans l'objet portatif 1 est ensuite mis en oeuvre, lors d'une étape g, qui applique la fonction Fc de chiffrement à cette donnée

[E't] et à la donnée diversifiée [Sid], de façon à obtenir un dernier résultat [R"1] = Fc(E't, Sid) qui, si l'objet est le support original, doit correspondre à la troisième donnée [R'1] déchiffrée lors de la quatrième étape d.

En effet, seul l'objet original, en raison de l'utilisation d'une donnée diversifiée, est en mesure de fournir le même résultat.

Le dernier résultat [R"1] est ensuite transmis aux circuits de traitement du terminal 2, dans lesquels il est comparé, au cours d'une huitième étape h, à la troisième donnée [R'1] issue du déchiffrement.

La concordance entre le dernier résultat [R"1] et la troisième donnée [R'1] signifie que l'objet est original; la non concordance signifie la présence d'une copie.

Des moyens appropriés, non représentés agissant par exemple sur les moyens d'affichage 24 (écran, imprimante), peuvent alors être mis en oeuvre dans le terminal 2 pour signifier à la personne habilitée chargée de la vérification que l'objet présenté est un original ou une copie.

L'invention peut donc aisément être mise en oeuvre dans tous les domaines où il est nécessaire de s'assurer de l'originalité d'un document. Elle est par exemple applicable à la constitution et à la vérification de documents d'identité, ou tous autres documents d'identification (permis de conduire, passeport et inscription de visas sur ceux-ci, certificats d'immatriculation de véhicules, etc): en utilisant des algorithmes à clés publiques, et la variante des figures 6 et 7, l'inscription des informations sur ces documents peut être réalisée par des personnes habilitées à l'aide d'une clé secrète ou confidentielle, alors que la vérification de leur originalité pourrait à la limite être réalisée par quiconque qui posséderait le terminal approprié et connaitrait la clé de déchiffrement.

Ainsi, par exemple, à la limite, n'importe qui pourrait vérifier qu'une pièce d'identité qui lui est présentée est originale, sans que cela lui donne pour autant les moyens de la contrefaire ou d'en réaliser une qui semblerait originale. Le système pourrait donc comporter de multiples dispositifs de vérification, sous forme de terminaux à la disposition du public, qui n'auraient pas besoin d'être interconnectés.

Bien entendu, il est tout à fait possible que la vérification soit autorisée de façon restreinte seulement à des personnes habilitées.

Un autre avantage de l'invention est le suivant: les terminaux utilisés tant pour l'inscription que pour la vérification peuvent être totalement indépendants les uns des autres. Il suffit qu'ils soient adaptés en conséquence ou possèdent les programmes appropriés. Ils peuvent donc être portables, fixes, embarqués dans des véhicules, etc.

## Revendications

1.  Procédé pour inscrire une information (I) sur un support, consistant à utiliser, en tant que support, un objet portatif électronique (1), et comportant une phase d'inscription au cours de laquelle, d'une part, sur requête d'une personne habilitée, lorsque l'objet est connecté à un terminal (2) approprié, l'information (I) est inscrite dans une zone (Ac) de mémoire, inscriptible et accessible au moins en lecture après son inscription, de l'objet (1), et d'autre part, une image (I') de l'information (I) est élaborée, par chiffrement de cette information (I), au moins à l'aide d'une première donnée (Ks), externe à l'objet portatif et fournie à des circuits de chiffrement (21) sous le contrôle de la personne inscrivant l'information puis l'image (I') est inscrite dans ladite zone de mémoire (Ac) accessible de l'objet portatif, caractérisé en ce que, pour vérifier ultérieurement l'originalité de l'information (I), le chiffrement de l'information (I) fait intervenir une seconde donnée (Sid), diversifiée pour chaque objet et tenant compte d'une donnée secrète (Si) de l'objet.

2. Procédé selon la revendication 1, caractérisé en ce qu'il comporte une phase de vérification de l'information contenue dans ladite zone de mémoire d'un objet portatif (1), au cours de laquelle l'objet est connecté à un terminal (2) approprié, et il est déterminé que l'image (I') résultat du chiffrement de l'information (I) contenue dans cette zone de mémoire a été obtenue en utilisant les première (Ks) et seconde (Sid) données.

3. Procédé selon l'une des revendications 1 ou 2, caractérisé en ce que la phase d'inscription consiste à:

   - élaborer l'information (I) et la faire inscrire dans la zone de mémoire (Ac) accessible de l'objet portatif (1), tout en la mémorisant temporairement dans la zone de travail (At) du terminal (2);

   - chiffrer l'information mémorisée dans la zone de mémoire (At) accessible du terminal (2) à l'aide d'un programme (Pt) contenu dans le terminal (2), qui met en oeuvre une fonction de chiffrement (Ft) prenant en compte cette information et la première donnée (Ks), pour obtenir un résultat intermédiaire (R1i), fonction de la première donnée (Ks) et de l'information;

   - transmettre ce résultat intermédiaire (R1i) aux circuits (12) de traitement de l'objet portatif (1), et y appliquer une fonction de chiffrement (Fc), mise en oeuvre par un programme (Pc) contenu dans lesdits circuits, qui prend en compte, ce résultat intermédiaire (R1i) et la seconde donnée (Sid) diversifiée de l'objet portatif 1, pour obtenir l'image (I') de l'information (I);

   - inscrire cette image (I') dans la zone de mémoire (Ac) accessible de l'objet portatif (1); et

   - effacer l'information qui a été mémorisée temporairement dans la zone de travail (At) du terminal (2) au début de cette phase.

4. Procédé selon la revendication 3, caractérisé en ce que la phase de vérification consiste à:

   - faire effectuer, par le terminal (2), une lecture de l'information (I) et de son image (I') contenues dans la zone Ac de mémoire accessible de l'objet portatif (1), et la mémorisation temporaire, dans sa zone de mémoire de travail (At), de ces données;

   - obtenir un résultat intermédiaire (R4i) dans le terminal en y chiffrant l'information (I) par mise en oeuvre du programme (Pt), mettant en oeuvre la fonction de chiffrement (Ft), qui tient compte de la clé (Ks) et de cette information (I);

   - transmettre ce résultat intermédiaire (R4i) aux circuits de traitement de l'objet portatif (1), et à y appliquer la fonction de chiffrement Fc, qui avait été utilisée lors de l'inscription, et qui est mise en oeuvre par le programme (Pc) contenu dans les circuits de l'objet portatif (1), tenant compte de la donnée diversifiée (Sid), pour obtenir un dernier résultat (R5i) qui, si l'information contenue dans l'objet portatif 1 est originale, correspond à l'image (I') contenue dans la zone de mémoire Ac accessible de l'objet portatif (1); et

   - transmettre ce dernier résultat (R5i) aux circuits de traitement du terminal, et le comparer avec l'image (I') mémorisée dans sa zone de mémoire de travail At, pour en déduire que l'information (I) contenue dans l'objet est originale, en cas d'égalité.

5. Procédé selon la revendication 3, caractérisé en ce que la phase de vérification consiste à:

   - mettre en oeuvre, dans les circuits de traitement de l'objet portatif (1), un programme de déchiffrement de l'image (I') inscrite dans sa zone de mémoire accessible (Ac), qui applique à l'image (I') et à la seconde donnée (Sid) diversifiée, la fonction de déchiffrement ($F^{-1}c$) correspondant à la fonction de chiffrement (Fc) qui avait été appliquée dans l'objet portatif (1) au premier résultat intermédiaire (R1i), de façon à obtenir un autre résultat intermédiaire (R2i);

   - transmettre ce second résultat intermédiaire (R2i) aux circuits de traitement du terminal (2) et lui appliquer, ainsi qu'à une clé de déchiffrement (Ks ou Kp), la fonction de déchiffrement ($F^{-1}t$) correspondant à la fonction de chiffrement (Ft) qui a été appliquée, lors de la phase d'inscription, dans le terminal (2) à l'information (I) originale pour obtenir un dernier résultat (R3i) qui, si l'information (I) contenue dans l'objet portatif (1) est originale, est cette information (I) elle-même; et

- comparer dans les circuits de traitement du terminal (2) l'information (I) contenue dans la zone Ac de mémoire accessible de l'objet portatif (1) et ce dernier résultat (R3i).

**6.** Procédé selon l'une des revendications 1 ou 2, caractérisé en ce que la phase d'inscription consiste à:

- élaborer et transmettre une donnée (Et) du terminal (2) vers les circuits de traitement de l'objet tout en la mémorisant temporairement dans la zone de travail (At) du terminal (2);

- chiffrer cette donnée (Et) dans l'objet en y appliquant, ainsi qu'à une donnée diversifiée (Sid) de l'objet une fonction (Fc) de chiffrement, pour obtenir un résultat (R1), et transmettre ce résultat vers la zone de travail (At) du terminal (2);

- transmettre et mémoriser l'information (I) dans la zone accessible Ac de l'objet portatif (1), tout en la mémorisant temporairement dans la zone de travail (At) du terminal (2);

- appliquer, dans les circuits de traitement du terminal, d'une part au bloc de données constitué par l'information (I), la donnée (Et), et le résultat (R1) du chiffrement de cette donnée, et d'autre part à la première donnée (Ks), une fonction de chiffrement (Ft) mise en oeuvre par un programme (Pt) du terminal, pour obtenir un résultat qui constitue l'image (I') de l'information;

- transmettre cette image (I') à l'objet portatif (1) et l'inscrire dans sa zone accessible (Ac) de mémoire; et

- effacer les données, résultats et/ou informations mémorisées temporairement dans la zone de travail (At) du terminal (2).

**7.** Procédé selon la revendication 6, caractérisé en ce que la donnée (Et) élaborée et transmise du terminal (2) vers les circuits de traitement de l'objet (1) est aléatoire.

**8.** Procédé selon l'une des revendications 6 ou 7, caractérisé en ce que la phase de vérification consiste à :

- copier dans la zone de travail (At) du terminal (2), à partir de la zone de mémoire (Ac) accessible de l'objet portatif (1), l'information (I) et son image (I');

- appliquer, dans les circuits de traitement du terminal (2), à l'image (I') et à une clé de déchiffrement (Ks, Kp), une fonction de déchiffrement ($F^{-1}t$) correspondant à la fonction de chiffrement (Ft) qui avait été utilisée lors de la phase d'inscription, pour obtenir un bloc de trois données (I"), (E't), (R'1);

- faire comparer, par les circuits de traitement du terminal (2), la première donnée (I") issue du déchiffrement et l'information (I) copiée de la zone de mémoire (Ac) accessible de l'objet portatif (1) vers la zone de travail (At) du terminal (2); et

- déterminer que l'information est authentique en cas de concordance, ou fausse dans le cas contraire.

**9.** Procédé selon la revendication 8, caractérisé en ce que, en cas de concordance, il consiste en outre à transmettre la seconde donnée (E't), issue du déchiffrement, du terminal (2) vers les circuits de traitement de l'objet (1), à y mettre en oeuvre le programme (Pc) contenu dans l'objet, qui applique la fonction (Fc) de chiffrement à cette donnée (E't) et à la donnée diversifiée (Sid), de façon à obtenir un dernier résultat (R"1), à transmettre ce dernier résultat (R"1) aux circuits de traitement du terminal (2), et à le comparer à la troisième donnée (R'1) issue du déchiffrement, pour en déduire, en cas de concordance, que l'information (I) contenue dans l'objet est originale.

**10.** Objet portatif électronique (1), tel qu'une carte à microprocesseur, pour la mise en oeuvre du procédé selon l'une des revendications 1 à 9, comportant au moins une zone secrète (Sc) dans laquelle est mémorisée une donnée secrète (Si), une zone de mémoire (Ac) accessible au moins en lecture, dans laquelle sont mémorisées une information (I) et une image (I') de cette information, cette image ayant été obtenue par chiffrement de cette information (I), au moins à l'aide d'une première donnée (Ks), externe à l'objet portatif et fournie à des circuits de chiffrement (21) sous le contrôle de la personne inscrivant l'information, caractérisé en ce que le chiffrement de l'information (I) fait intervenir une seconde donnée (Sid), diversifiée pour chaque objet et tenant compte d'une donnée secrète (Si) de l'objet.

**Patentansprüche**

1. Verfahren zum Schreiben von Information (I) auf einen Träger, das darin besteht, als Träger einen elektronischen tragbaren Gegenstand (1) zu verwenden, und das eine Schreibphase umfaßt, in deren Verlauf einerseits auf Anforderung einer befugten Person dann, wenn der Gegenstand mit einem geeigneten Terminal (2) verbunden ist, die Information (I) in eine Speicherzone (Ac) des Gegenstands (1), die beschreibbar ist und auf die wenigstens zum Lesen nach dem Beschreiben zugegriffen werden kann, geschrieben wird und andererseits ein Bild (I') der Information (I) durch Verschlüsselung dieser Information (I) wenigstens mit Hilfe einer ersten Dateneinheit (Ks), die sich außerhalb des tragbaren Gegenstands befindet und unter der Steuerung der die Information schreibenden Person an Verschlüsselungsschaltungen (21) geliefert wird, erstellt wird, woraufhin das Bild (I') in die zugreifbare Speicherzone (Ac) des tragbaren Gegenstands geschrieben wird, dadurch gekennzeichnet, daß für die spätere Verifizierung der Ursprünglichkeit der Information (I) die Verschlüsselung der Information (I) eine zweite Dateneinheit (Sid) einführt, die für jeden Gegenstand diversifiziert ist und eine geheime Dateneinheit (Si) des Gegenstands einbezieht.

2. Verfahren nach Anspruch 1, dadurch gekennzeichnet, daß es eine Phase der Verifikation der in der Speicherzone eines tragbaren Gegenstands (1) enthaltenen Information enthält, in deren Verlauf der Gegenstand an ein geeignetes Terminal (2) angeschlossen wird und festgestellt wird, daß das Bild (I'), das sich aus der Verschlüsselung der in dieser Zone des Speichers enthaltenen Information (I) ergibt, unter Verwendung der ersten (Ks) und der zweiten (Sid) Dateneinheit erhalten worden ist.

3. Verfahren nach einem der Ansprüche 1 oder 2, dadurch gekennzeichnet, daß die Schreibphase darin besteht:

   - die Information (I) zu erstellen und sie in die Speicherzone (Ac) zu schreiben, auf die vom tragbaren Gegenstand (1) zugegriffen werden kann, wobei sie vorübergehend in der Arbeitszone (At) des Terminals (2) gespeichert wird;

   - die in der zugreifbaren Speicherzone (At) des Terminals (2) gespeicherte Information mit Hilfe eines im Terminal (2) enthaltenen Programms (Pt) zu verschlüsseln, wobei das Programm eine Verschlüsselungsfunktion (Ft) ausführt, die diese Information und die erste Dateneinheit (Ks) berücksichtigt, um ein von der ersten Dateneinheit (Ks) und von der Information abhängiges Zwischenergebnis (R1i) zu erhalten;

   - dieses Zwischenergebnis (R1i) an die Verarbeitungsschaltungen (12) des tragbaren Gegenstands (1) zu übertragen und auf es eine Verschlüsselungsfunktion (Fc) anzuwenden, die von einem in den Schaltungen enthaltenen Programm (Pc) ausgeführt wird, das dieses Zwischenergebnis (R1i) und die diversifizierte zweite Dateneinheit (Sid) des tragbaren Gegenstands (1) berücksichtigt, um das Bild (I') der Information (I) zu erhalten;

   - dieses Bild (I') in die zugreifbare Speicherzone (Ac) des tragbaren Gegenstands (1) zu schreiben; und

   - die Information zu löschen, die am Beginn dieser Phase vorübergehend in der Arbeitszone (At) des Terminals (2) gespeichert worden ist.

4. Verfahren nach Anspruch 3, dadurch gekennzeichnet, daß die Verifikationsphase darin besteht:

   - durch das Terminal (2) ein Lesen der Information (I) und ihres Bildes (I'), die in der zugreifbaren Speicherzone (Ac) des tragbaren Gegenstands (1) enthalten sind, sowie das vorübergehende Speichern dieser Daten in seiner Arbeitsspeicherzone (At) auszuführen;

   - ein Zwischenergebnis (R4i) im Terminal zu erhalten, indem hier die Information (I) durch Ausführen des Programms (Pt) verschlüsselt wird, das die Verschlüsselungsfunktion (Ft) ausführt, die den Schlüssel (Ks) und diese Information (I) einbezieht;

   - dieses Zwischenergebnis (R4i) an die Verarbeitungsschaltungen des tragbaren Gegenstands (1) zu übertragen und darauf die Verschlüsselungsfunktion (Fc) anzuwenden, die beim Schreiben verwendet worden ist und die durch das in den Schaltungen des tragbaren Gegenstands (1) enthaltene Programm (Pc) ausgeführt wird, wobei es die diversifizierte Dateneinheit (Sid) berücksichtigt, um ein Endergebnis (R5i) zu erhalten, das, falls die im tragbaren Gegenstand (1) enthaltene Information die ursprüngliche Information ist, dem in der zugreifbaren Speicherzone (Ac) des tragbaren Gegenstands (1) enthaltenen Bild (I') entspricht; und

   - dieses Endergebnis (R5i) an die Verarbeitungsschaltungen des Terminals zu übertragen und es mit dem in seiner Arbeitsspeicherzone (At) gespeicherten Bild (I') zu vergleichen, um daraus im Falle der Gleichheit abzuleiten, daß die in dem Gegenstand enthaltene Information (I) die ursprüngliche Information ist.

5. Verfahren nach Anspruch 3, dadurch gekennzeichnet, daß die Verifikationsphase darin besteht:

- in den Verarbeitungsschaltungen des tragbaren Gegenstands (1) ein Programm zur Entschlüsselung des in die zugreifbare Speicherzone (Ac) geschriebenen Bildes (I') auszuführen, das auf das Bild (I') und die zweite diversifizierte Dateneinheit (Sid) die Entschlüsselungsfunktion (F$^{-1}$c) anwendet, die der Verschlüsselungsfunktion (Fc) entspricht, die im tragbaren Gegenstand (1) auf das erste Zwischenergebnis (R1i) angewendet worden ist, um so ein weiteres Zwischenergebnis (R2i) zu erhalten;

- dieses zweite Zwischenergebnis (R2i) an die Verarbeitungsschaltungen des Terminals (2) zu übertragen und auf es sowie auf einen Entschlüsselungsschlüssel (Ks oder Kp) die Entschlüsselungsfunktion (F$^{-1}$t) anzuwenden, die der Verschlüsselungsfunktion (Ft) entspricht, die in der Schreibphase im Terminal (2) auf die ursprüngliche Information (I) angewendet worden ist, um ein Endergebnis (R3i) zu erhalten, das, falls die im tragbaren Gegenstand (1) enthaltene Information (I) die ursprüngliche Information ist, diese Information (I) selbst ist; und

- in den Verarbeitungsschaltungen des Terminals (2) die Information (I), die in der zugreifbaren Speicherzone (Ac) des tragbaren Gegenstands (1) enthalten ist, mit diesem Endergebnis (R3i) zu vergleichen.

6. Verfahren nach einem der Ansprüche 1 oder 2, dadurch gekennzeichnet, daß die Schreibphase darin besteht:

- eine Dateneinheit (Et) des Terminals (2) zu erstellen und an die Verarbeitungsschaltungen des Gegenstands zu übertragen, wobei sie vorübergehend in der Arbeitszone (At) des Gegenstands (2) gespeichert wird;

- diese Dateneinheit (Et) im Gegenstand zu verschlüsseln, indem auf sie sowie auf eine diversifizierte Dateneinheit (Sid) des Gegenstands eine Verschlüsselungsfunktion (Fc) angewendet wird, um ein Ergebnis (R1) zu erhalten, und dieses Ergebnis an die Arbeitszone (At) des Terminals (2) zu übertragen;

- die Information (I) an die zugreifbare Zone (Ac) des tragbaren Gegenstands (1) zu übertragen und in ihr zu speichern, wobei sie vorübergehend in der Arbeitszone (At) des Terminals (2) gespeichert wird;

- in den Verarbeitungsschaltungen des Terminals einerseits auf den durch die Information (I), die Dateneinheit (Et) und das Ergebnis (R1) der Verschlüsselung dieser Dateneinheit gebildeten Datenblock und andererseits auf die erste Dateneinheit (Ks) eine Verschlüsselungsfunktion (Ft) anzuwenden, die durch ein Programm (Pt) des Terminals ausgeführt wird, um ein Ergebnis zu erhalten, das das Bild (I') der Information bildet;

- dieses Bild (I') an den tragbaren Gegenstand (1) zu übertragen und es in die zugreifbare Zone (Ac) des Speichers zu schreiben; und

- die Dateneinheiten, Ergebnisse und/oder Informationen, die vorübergehend in der Arbeitszone (At) des Terminals (2) gespeichert worden sind, zu löschen.

7. Verfahren nach Anspruch 6, dadurch gekennzeichnet, daß die erstellte und vom Terminal (2) an die Verarbeitungsschaltungen des Gegenstands (1) übertragene Dateneinheit (Et) zufällig ist.

8. Verfahren nach einem der Ansprüche 6 oder 7, dadurch gekennzeichnet, daß die Verifikationsphase darin besteht:

- die Information (I) und deren Bild (I') aus der zugreifbaren Speicherzone (Ac) des tragbaren Gegenstands (1) in die Arbeitszone (At) des Terminals (2) zu kopieren;

- in den Verarbeitungsschaltungen des Terminals (2) auf das Bild (I') und auf einen Entschlüsselungsschlüssel (Ks, Kp) eine Entschlüsselungsfunktion (F$^{-1}$t) anzuwenden, die der Verschlüsselungsfunktion (Ft) entspricht, die in der Schreibphase verwendet worden war, um einen Block aus drei Dateneinheiten (I"), (E't), (R'1) zu erhalten;

- durch die Verarbeitungsschaltungen des Terminals (2) die aus der Entschlüsselung stammende erste Dateneinheit (I") und die von der zugreifbaren Speicherzone (Ac) des tragbaren Gegenstands (1) in die Arbeitszone (At) des Terminals (2) kopierte Information (I) zu vergleichen; und

- zu bestimmen, daß im Fall der Übereinstimmung die Information echt ist, oder im entgegengesetzten Fall, daß sie falsch ist.

9. Verfahren nach Anspruch 8, dadurch gekennzeichnet, daß es im Fall der Übereinstimmung außerdem darin besteht, die aus der Entschlüsselung stammende zweite Dateneinheit (E't) vom Terminal (2) an die Verarbeitungsschaltungen des Gegenstands (1) zu übertragen, hier das im Gegenstand enthaltene Programm (Pc) auszuführen, das die Verschlüsselungsfunktion (Fc) auf diese Dateneinheit (E't) und auf die diversifizierte Dateneinheit (Sid) anwendet, derart, daß ein Endergebnis (R"1) erhalten wird, dieses Endergebnis (R"1) an die Verarbeitungsschaltungen des Terminals (2) zu übertragen und es mit der dritten von der Entschlüsselung stammenden Dateneinheit (R'1) zu vergleichen, um daraus im Fall der Übereinstimmung abzuleiten, daß die im Gegenstand enthaltene Information (I) die ursprüngliche Information ist.

10. Elektronischer tragbarer Gegenstand (1) wie etwa eine Karte mit Mikroprozessor für die Ausführung des Verfahrens nach einem der Ansprüchen 1 bis 9, der versehen ist mit wenigstens einer Geheimzone (Sc), in der eine geheime Dateneinheit (Si) gespeichert ist, einer wenigstens für das Lesen zugreifbaren Speicherzone (Ac), in der eine Information (I) und ein Bild (I') dieser Information gespeichert sind, wobei dieses Bild durch Verschlüsselung dieser Information (I) wenigstens mit Hilfe einer ersten Dateneinheit (Ks), die sich außerhalb des tragbaren Gegenstands befindet und unter der Steuerung der die Information schreibenden Person an Verschlüsselungsschaltungen (21) geliefert wird, erhalten worden ist, dadurch gekennzeichnet, daß die Verschlüsselung der Information (I) eine zweite Dateneinheit (Sid) einführt, die für jeden Gegenstand diversifiziert ist und eine geheime Dateneinheit (Si) des Gegenstands einbezieht.

## Claims

1. Method for recording information (1) on a medium, consisting in using as a medium a portable electronic object (1), and comprising a recording phase during which, on the one hand, at the request of an authorised person, when the object is connected to an appropriate terminal (2), the information (1) is recorded in a memory zone (Ac), recordable and accessible at least in read mode after its recording, of the object (1) and, on the other hand, an image (1') of the information (1) is prepared, by encoding this information (1), at least with the aid of a first datum (Ks), external to the portable object and provided with encoding circuits (21) under the control of the person recording the information, then the image (1') is recorded in said memory zone (Ac) accessible to the portable object,
characterised in that subsequently, to verify the originality of the information (1), the encoding of the information (1) involves a second datum (Sid), varied for each object and taking account of a secret datum (Si) of the object.

2. Method according to Claim 1, characterised in that it comprises a phase of verifying the information contained in said memory zone of a portable object (1), during which the object is connected to an appropriate terminal (2), and it is determined that the result image (1') from the encoding of the information (1) contained in this memory zone has been obtained by using the first (Ks) and second (Sid) data.

3. Method according to one of Claims 1 or 2, characterised in that the recording phase consists in:

   - preparing the information (1) and having it recorded in the memory zone (Ac) accessible to the portable object (1), while storing it temporarily in the working zone (At) of the terminal (2);

   - encoding the information stored in the memory zone (At) accessible to the terminal (2) with the aid of a program (Pt) contained in the terminal (2), which implements an encoding function (Ft) taking account of this information and the first datum (Ks), in order to obtain an intermediate result (Rali), as a function of the first datum (Ks) and of the information;

   - transmitting this intermediate result (Rli) to the processing circuits (12) of the portable object (1), and therein applying an encoding function (Fc), implemented by a program (Pc) contained in said circuits, which takes account of this intermediate result (Rli) and the second, varied datum (Sid), of the portable object 1, in order to obtain the image (1') of the information (1);

   - recording this image (1') in the memory zone (Ac) accessible to the portable object (1); and

   - deleting the information that has been stored temporarily in the working zone (At) of the terminal (2) at the start of this phase.

4. Method according to Claim 3, characterised in that the verification phase consists in:

   - effecting, by the terminal (2), a reading of the information (1) and of its image (1') contained in the memory zone Ac accessible to the portable object (1), and the temporary storing, in its working memory zone (At), of these data;

- obtaining an intermediate result (R4i) in the terminal and therein encoding the information (1) by implementing the program (Pt), using the encoding function (Ft), which takes account of the key (Ks) and of this information (1);

- transmitting this intermediate result (R4i) to the processing circuits of the portable object (1), and therein applying an encoding function Fc, which had been used at the time of recording, and which is implemented by the program (Pc) contained in the circuits of the portable object (1), taking account of the varied datum (Sid), in order to obtain a last result (R5i) which, if the information contained in the portable object 1 is original, corresponds to the image (1') contained in the memory zone Ac accessible to the portable object (1); and

- transmitting this last result (R5i) to the processing circuits of the terminal, and comparing it with the image (1') stored in its working memory zone At, in order to deduce that the information contained in the object is original, in the event of equality.

5. Method according to Claim 3, characterised in that the verification phase consists in:

- implementing, in the processing circuits of the portable object (1), a program for decoding the image (1') recorded in its accessible memory zone (Ac), which applies to the image (1') and to the second varied datum (Sid), the decoding function (F⁻¹c) corresponding to the encoding function (Fc) which had been applied within the portable object (1) to the first intermediate result (R1i), so as to obtain another intermediate result (R2i);

- transmitting this second intermediate result (R2i) to the processing circuits of the terminal (2) and applying to it, and to a decoding key (Ks or Kp), the decoding function (F⁻¹t) corresponding to the encoding function (Ft) that was applied, at the time of the recording phase, within the terminal (2) to the original information (1) in order to obtain a last result (R3i) which, if the information (1) contained in the portable object (1) is original, is this information (1) itself; and

- comparing within the processing circuits of the terminal (2) the information (1) contained in the memory zone AC accessible to the portable object (1) and this last result (R3i).

6. Process according to one of Claims 1 or 2, characterised in that the recording phase consists in:

- preparing and transmitting a datum (Et) from the terminal (2) to the processing circuits of the object, while storing it temporarily in the working area (At) of the terminal (2);

- encoding this datum (Et) within the object by applying thereto, and to any varied datum (Sid) of the object, an encoding function (Fc) in order to obtain a result (R1), and transmitting this result to the working zone (At) of the terminal (2);

- transmitting and storing the information (1) in the zone Ac accessible to the portable object (1), while storing it temporarily in the working area (At) of the terminal (2);

- applying, within the processing circuits of the terminal, on the one hand to the data block constituted by the information (1), the datum (Et), and the result (R1) of encoding this datum and, on the other hand to the first datum (Ks), an encoding function (Ft) implemented by a program (Pt) of the terminal, in order to obtain a result which constitutes the image (1') of the information;

- transmitting this image (1') to the portable object (1) and recording it in its accessible memory zone (Ac); and

- deleting the data, results and/or information stored temporarily in the working zone (At) of the terminal (2).

7. Method according to Claim 6, characterised in that the datum (Et) prepared and transmitted from the terminal (2) to the processing circuits of the object (1) is random.

8. Method according to one of Claims 6 or 7, characterised in that the verification phase consists in:

- copying into the working zone (At) of the terminal (2), from the memory zone (Ac) accessible to the portable object (1), the information (1) and its image (1');

- applying, within the processing circuits of the terminal (2), to the image (1') and to a decoding key (Ks, Kp), a decoding function (F⁻¹t) corresponding to the encoding function (Ft) that had been used at the time of the recording phase, in order to obtain a block of three data (1"), (E't), (R'1);

- having compared, by the processing circuits of the terminal (2) the first datum (1") arising from the decoding with the information (1) copied from the memory zone (Ac) accessible to the portable object (1) into the working zone (At) of the terminal (2); and

- determining that the information is authentic in the case of agreement, or false in the opposite case.

9. Method according to Claim 8, characterised in that, in the case of agreement, it further consists in transmitting the second datum (E't), arising from the decoding, from the terminal (2) to the processing circuits of the object (1) and in therein implementing the program (Pc) contained in the object, which applies the function (Fc) of encoding to this datum (E't) and to the varied datum (Sid), so as to obtain a last result (R"1), in transmitting this last result (R"1) to the processing circuits of the terminal (2), and in comparing it with the third datum (R'1) arising from the decoding, in order to deduce therefrom, in the event of agreement, that the information (1) contained in the object is original.

10. Portable electronic object (1), such as a smart card, for implementing the method according to one of Claims 1 to 9, comprising at least one secret zone (Sc) in which a secret datum (Si) is stored, a memory zone (Ac) accessible at least in read mode, in which a piece of information (1) and an image (1') of this information are,stored, this image having been obtained by encoding this information (1), at least with the aid of a first datum (Ks), external to the portable object and supplied to encoding circuits (21) under the control of the person recording the information,
characterised in that the encoding of the information (1) involves a second datum (Sid), varied for each object and taking account of a secret datum (Si) of the object.

**FIG.1**

**FIG.2**

TERMINAL

$A_t$

22

[I]

étape $\underline{a}$

étape $\underline{b}$

21 $R_{1i}=F_t(I,K_s)$

étape $\underline{c}$

2

OBJET

11

[I]

[I']

$A_c$

étape $\underline{d}$

12

$F_c(R_{1i},S_{id})$

1

# FIG.3

23 [PIN']

étape $\underline{a}$

[PIN'] $\overset{?}{\Leftrightarrow}$ [PIN] 12

étape $\underline{e}$

$[I]\overset{?}{=}R_{3i}$

étape $\underline{d}$

étape $\underline{a}$

[PIN] $S_c$

[I]

[I'] $A_c$

11

$R_{3i}=F_t^{-1}(R_{2i},K_p$ ou $K_s)$

étape $\underline{b}$

$R_{2i}=F^{-1}(I',S_{id})$ 12

21

2

étape $\underline{c}$

1

# FIG.4

18

étape $\underline{a}$

$E_t$

$R_1$

$A_t$

$[I]$

étape $\underline{b}$

$R_1 = F_c(E_t, S_{id})$

étape $\underline{c}$

$[I]$

$[I']$

$\Big\}A_c$

$12$

$11$

étape $\underline{d}$

$I' = F_t(E_t, R_1, I, K_s)$

étape $\underline{e}$

$21$

$1$

$2$

## FIG.6

$23$

$[PIN']$

étape $\underline{a}$

$[PIN'] \overset{?}{\Leftrightarrow} [PIN]$

$12$

$[I]$

$[I']$

étape $\underline{b}$

$[PIN]$

$S_c$

$I$

$I'$

étape $\underline{c}$

$21$

$F_t^{-1}(I', K_p)$

étape $\underline{e}$

étape $\underline{d}$

$[I] \overset{?}{=} [I'']$

$[I'']$

étape $\underline{h}$

étape $\underline{g}$

$R'_1$

$R'_1 \overset{?}{=} R''_1$

$R''_1 = F_c(E'_t, S_{id})$

$E'_t$

étape $\underline{f}$

$12$

## FIG.7

$$FIG.5$$